# EUROPÄISCHE PATENTSCHRIFT

(11) **EP 1 037 782 B1**
(45) Veröffentlichungstag und Bekanntmachung des Hinweises auf die Patenterteilung: **15.12.2004**
(21) Anmeldenummer: 98959878.4
(22) Anmeldetag: 20.11.1998
(51) Int. Cl.: B60T 8/88

(54) **VERBUNDSYSTEM ZUR REGELUNG DES FAHRVERHALTENS EINES KRAFTFAHRZEUGS**
COMBINED SYSTEM FOR CONTROLLING THE HANDLING PERFORMANCE OF A MOTOR VEHICLE
SYSTEME COMPOSE POUR LE REGLAGE DU COMPORTEMENT ROUTIER D'UN VEHICULE

(30) Priorität: 05.12.1997 DE 19753907
(43) Veröffentlichungstag der Anmeldung: 27.09.2000
(73) Patentinhaber: Continental Teves AG & Co. oHG, 60488 Frankfurt (DE)
(72) Erfinder: FENNEL, Helmut, D-65812 Bad Soden (DE)
(86) Internationale Anmeldenummer: PCT/EP1998/007452
(87) Internationale Veröffentlichungsnummer: WO 1999/029549

(56) Entgegenhaltungen:
- DE-A- 4 414 980
- DE-A- 4 439 060
- DE-A- 19 607 429

## Beschreibung

Die Erfindung bezieht sich auf ein Verbundsystem zur Regelung des Fahrverhaltens eines Kraftfahrzeugs nach verschiedenartigen Regelungsprinzipien oder Regelungsfunktionen, z.B. zur Regelung der Fahrstabilität und Lenkbarkeit (ABS), des Anfahrverhaltens oder der Traktion (ASR), der Fahrdynamik (FDR, ASMS, ESP), der Bremskraftverteilung (EBV) etc. Das System enthält Einrichtungen zur Überwachung der einzelnen Regelungsfunktionen und zur Änderung des Regelungsablaufs oder Abschaltung oder Teilabschaltung einzelner Funktionen beim Auftreten von Defekten oder Fehlfunktionen.

Die Entwicklung von Kraftfahrzeug-Regelungssystemen zielt auf die Schaffung und Verwendung komplexer Systeme, die eine Vielzahl von verschiedenartigen Regelungsprinzipien oder Regelungsfunktionen umfassen. Eine bekannte Fahrdynamikregelung (FDR, ASMS, ESP) umfaßt beispielsweise u.a. ein Antiblockiersystem (ABS), eine Antriebsschlupfregelung (ASR), eine Giermomentenregelung (GMR) und eine Regelung der Bremskraftverteilung (EBV). Mehrere oder alle diese Funktionsarten machen von den gleichen Eingangssignalen Gebrauch. Beispielsweise setzen alle Systeme das Messen und Auswerten des Drehverhaltens der einzelnen Räder voraus. Andere Signale werden nur für einige der Funktionsarten benötigt. Entsprechendes gilt für die Elektronik und Aktuatorik; die elektronischen Schaltkreise, Computer-Bausteine, Überwachungsschaltungen etc. und auch die elektrisch steuerbaren Hydraulikventile, mit denen der Bremsdruck moduliert wird, sind bei einem solchen Verbund vielfach verwendbar. Es bietet sich daher an, zur Vereinfachung und zur Verringerung des Aufwandes ein solches Verbundsystem in integrierter Bauweise zu realisieren.

Andererseits hat die Zusammenfassung der Funktionsarten und die Integration der verschiedenen Elemente und Regelungssysteme den Nachteil, daß sich Fehler auf das Gesamtsystem auswirken und daher zu der Abschaltung des Gesamtsystems und somit sämtlicher Regelungsfunktionen führen.

Aus der DE 44 39 060 A1 ist es bereits bekannt, für ein komplexes Fahrzeug-Regelungssystem eine Mikroprozessoranordnung zu verwenden, die aus drei einzelnen Mikroprozessorsystemen zusammengesetzt ist, auf die die einzelnen Funktionen, z.B. ABS, ASR, EBV, aufgeteilt sind. Dies hat den Vorteil, daß die einzelnen Regelungssysteme relativ unabhängig voneinander sind, weshalb beim Auftreten einer Fehlfunktion in einem der System nur der betroffene Zweig, z.B. die Antriebsschlupfregelung (ASR), abgeschaltet zu werden braucht, während die Bremskraftverteilung (EBV) weiterhin in Betrieb bleibt.

Der vorliegenden Erfindung liegt nun die Aufgabe zugrunde, ein Verbundsystem der eingangs genannten Art zu entwickeln, bei dem einerseits beim Auftreten eines Fehlers nur der unmittelbar von dem Fehler betroffene Teil bzw. die unmittelbar betroffene Regelungsfunktion außer Kraft.gesetzt wird, bei dem jedoch andererseits, weil die Regelungsfunktionen zum großen Teil sicherheitskritisch sind, gewährleistet ist, daß durch die Aufrechterhaltung eines bestimmten Teils der Regelungsfunktionen die Sicherheit des Fahrzeuges erhalten bleibt.

Es hat sich gezeigt, daß diese Aufgabe durch das im Anspruch 1 beschriebene Verbundsystem gelöst werden kann, dessen Besonderheit darin besteht, daß eine Rangordnung der einzelnen Regelungsfunktionen nach Sicherheitsniveaus, d.h. nach ihrer Notwendigkeit und/oder nach ihrer Bedeutung für die Sicherheit des Fahrzeugs, vorgesehen ist, daß die potentiellen Fehlerquellen, Fehlerarten, Fehlfunktionen etc. nach ihren möglichen Auswirkungen auf die Regelungsfunktionen geordnet und den nach der Rangordnung geordneten Regelungsfunktionen derart zugeordnet sind, daß beim Erkennen eines Fehlers nur die in der Rangordnung unterhalb des Sicherheitsniveaus, das dem Fehler zugeordnet ist,liegenden Regelungsfunktionen aufrechterhaltbar sind.

Die Erfindung beruht also auf der Überlegung, daß durch eine solche Anordnung und Zuordnung, bei der die verschiedenartigen Regelungsfunktionen entsprechend ihrer Bedeutung auf verschiedenen Sicherheitsniveaus angeordnet sind und bei der die Fehlerquellen innerhalb der einzelnen Kategorien nach ihrer Auswirkung auf die Regelungsfunktionen sortiert sind, ein Verbundsystem entsteht, welches in optimaler weise beim Auftreten eines Fehlers - je nach der Anordnung und Zuordnung dieser Fehlerart zu den Regelungsfunktionen bzw. Funktionsniveaus - ein System entsteht, das bei jeder Ausfallsituation in bestimmter Weise reagiert. In jeder Ausfallsituation werden mit hoher Zuverlässigkeit alle über dem entsprechenden Niveau liegenden Funktionen abgeschaltet oder umgeschaltet, alle unterhalb des entsprechenden Sicherheitsniveaus liegenden Funktionen dagegen unbeschränkt oder beschränkt aufrechterhalten.

Nach einem vorteilhaften Ausführungsbeispiel der Erfindung sind die Fehlerquellen nach verschiedenen, weitgehend voneinander unabhängigen Kategorien erfaßt und sortiert und derart angeordnet, daß die Fehlerquellen jeder Kategorie unabhängig von den Fehlerquellen der anderen Kategorien beim Auftreten eines Fehlers nur die unterhalb des Sicherheitsniveaus, das dem entsprechenden Fehler zugeordnet ist, liegenden Funktionen aufrechterhalten werden. Als Beispiele für solche Kategorien, in denen bestimmte Fehlerarten oder Fehlerquellen zusammengefaßt sind, sind z.B. die Sensorik, die Elektronik (einschließlich Elektrik und Kommunikation) und die Aktuatorik oder Hydraulik zu nennen.

Die Fahrzeugregelungssysteme oder Verbundsysteme sind mittlerweile so komplex geworden, daß es nicht mehr sinnvoll ist, beim Auftreten eines Fehlers sämtliche Regelungsfunktionen stillzulegen. Durch die bei bestimmten Fehlern an sich unnötige Stillsetzung sicherheitsrelevanter Funktionen können sogar unnötigerweise gefährliche Situationen entstehen. Der Erfindung liegt die Überlegung zugrunde, daß eine gestufte Rücknahme der Funktionen in Abhängigkeit von der aufgetretenen oder erkannten Fehlfunktion vorzuziehen ist. Bei einer Fahrdynamikregelung (FDR, ASMS), die ABS-, ASR-, EBV- sowie Kommunikations- und Diagnosefunktionen umfaßt, könnte eine Rangordnung, die Sicherheitsniveaus entspricht und sich für eine gestufte Rücknahme anbietet, beispielsweise folgendermaßen aussehen:
- ASMS (Vollfunktion),
- ABS + ASR + EBV-Funktion,
- ABS + EBV-Funktion,
- ABS Voll,
- ABS HA,
- EBV-Funktion,
- Kommunikations-/Diagnosefunktion.

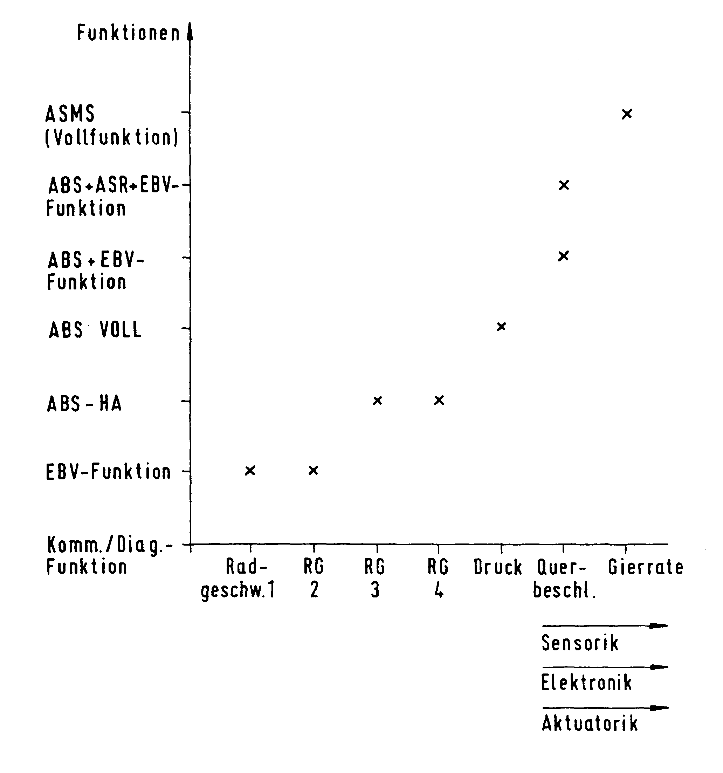

In der beigefügten Abbildung, die in Form eines zweidimensionalen Diagramms die Abhängigkeit oder Zuordnung der einzelnen Sicherheitsniveaus bzw. Regelungsfunktionen von bestimmten Sensor fehlern wiedergibt, sind auf der Koordinaten die vorgenannten Rücknahmestufen eines Verbundsystems, hier eines ASMS (Fahrdynamikregelungssystems), in der vorgenannten Reihenfolge wiedergegeben. Die unterste Stufe (Kommunikations-/Diagnosefunktion) kann, was ohne weiteres einleuchtet, praktisch bei jedem Fehlerniveau oder Ausfall aufrechterhalten werden, während die Vollfunktion, also das höchste oder Sicherheitsniveau nur im fehlerfreien Zustand in Betrieb bleiben sollte. Die anderen der vorgenannten Funktions- oder Sicherheitsebenen liegen dazwischen. Beispielsweise kann in dem hier dargestellten Beispiel, solange die vier Radsensoren intakt sind, zumindest die - für die Fahrstabilität des Fahrzeugs besonders wichtige - Blokkierschutzregelung der Fahrzeughinterachse (ABS HA) aufrechterhalten werden.

Auf der Abszisse sind Fehlerarten der Kategorie "Sensorik" dargestellt. Die hier wiedergegebene Rangfolge, die natürlich nur ein spezielles Beispiel von mehreren Möglichkeiten ist, beginnt mit den einzelnen Radsensoren, umfaßt ferner einen Drucksensor und einen Querbeschleunigungssensor sowie schließlich einen Giergeschwindigkeitssensor, der in diesem Beispiel hier nur für die Vollfunktion (ASMS) benötigt wird.

Eine weitere Kategorie dieser Art ist die Elektronik des Verbundregelungssystems, einschließlich der Elektrik, dem Datenbus, Kabelbaum etc. Mit diesen Elementen läßt sich eine ähnliche Reihenfolge oder Rangfolge wie bei der dargestellten Kategorie "Sensorik" aufstellen, wobei dann den einzelnen Elementen die von der Vollfunktion bis hinab zur Kommunikationsfunktion gegliederten Sicherheitsebenen zugeordnet werden können.

Es können beispielsweise solche "zweidimensionalen" Abhängigkeiten, wie sie die beigefügte Abbildung für die Kategorie "Sensorik" zeigt, mit entsprechenden zweidimensionalen, hier auf der Abszisse nur angedeuteten Abhängigkeiten (Regelungsfunktionen in Abhängigkeit von der Elektronik, Regelungsfunktionen in Abhängigkeit von der Aktuatorik) überlagert werden. Dadurch entsteht gewissermaßen ein "Sicherheitsquader", dem zu entnehmen ist, welche Regelungsfunktionen oder welches Sicherheitsniveau beim Auftreten eines bestimmten Sensorik-, Elektronik- oder Aktuatorik-Fehlers oder bei einer bestimmten Fehlerkombination noch aufrechterhalten werden kann.

Auf Basis eines solchen Sicherheitsquaders läßt sich dann das erfindungsgemäße Verbundsystem derart auslegen, daß in Abhängigkeit von der vorgegebenen oder gewünschten Rangfolge der potentiellen Fehler einerseits und der Rangfolge der Regelungsfunktionen bzw. der Sicherheitsniveaus andererseits je nach Art und Bedeutung des jeweils auftretenden Fehler oder der erkannten Fehlerkombination die noch möglichen Regelungsfunktionen ohne Beeinträchtigung der Sicherheit des Fahrzeugs aufrechterhalten werden, andere, oberhalb des Sicherheitsniveaus liegende Funktionen dagegen abgeschaltet werden, um das Entstehen kritischer, gefährlicher Situationen mit hoher Zuverlässigkeit zu verhindern.

Der Vorteil eines solchen Sicherheitsmodells oder Sicherheitsquaders besteht darin, daß sich praktisch jede Ausfallsituation in Abhängigkeit von den aufgetretenen Fehlern oder Fehlerkombinationen darstellen läßt. Es läßt sich somit mit großer Zuverlässigkeit und Genauigkeit ermitteln, welche der zahlreichen Regelungsfunktionen tatsächlich noch aufrechterhalten werden können und welche abgeschaltet oder beschränkt werden müssen, um die Sicherheit des Fahrzeugs aufrechtzuerhalten.

## Patentansprüche

1. Verbundsystem zur Regelung des Fahrverhaltens eines Kraftfahrzeugs nach verschiedenartigen Regelungsfunktionen, mit Einrichtungen zur Überwachung der einzelnen Regelungsfunktionen und zur Änderung des Regelungsablaufs oder Abschaltung einzelner Funktionen (Teilabschaltung) beim Erkennen von Defekten oder Fehlfunktionen, **dadurch gekennzeichnet, dass** eine Rangordnung der einzelnen Regelungsfunktionen nach Sicherheitsniveaus, d.h. nach ihrer Notwendigkeit und/oder nach ihrer Bedeutung für die Sicherheit des Fahrzeugs, vorgesehen ist, dass die potentiellen Fehlerquellen, Fehlerarten, Fehlfunktionen etc. nach ihren möglichen Auswirkungen auf die Regelungsfunktionen geordnet den Sicherheitsniveaus zugeordnet sind, und dass beim Erkennen eines Fehlers nur die in der Rangordnung unterhalb des Sicherheitsniveaus, das dem aufgetretenen Fehler zugeordnet ist, liegenden Regelungsfunktionen aufrechterhaltbar sind.

2. Verbundsystem nach Anspruch 1, **dadurch gekennzeichnet, dass** dieses mehrere der folgenden Regelungsfunktionen umfasst:
Regelung der Fahrstabilität und Lenkbarkeit (ABS),
des Anfahrverhaltens oder der Traktion (ASR),
der Fahrdynamik (FDR, ASMS, ESPS), und/oder
der Bremskraftverteilung (EBV).

3. Verbundsystem nach Anspruch 1 oder 2, **dadurch gekennzeichnet, dass** im Fehlerfall einige der in der Rangordnung unterhalb des Sicherheitsniveaus, das dem aufgetretenen Fehler zugeordnet ist, liegenden Regelungsfunktionen nur beschränkt aufrechterhaltbar sind.

4. Verbundsystem nach einem oder mehreren der Ansprüche 1 bis 3, **dadurch gekennzeichnet, dass** die Fehlerquellen, die Fehlerarten oder Fehlfunktionen nach verschiedenen, weitgehend voneinander unabhängigen Kategorien erfasst und jeweils nach ihren Auswirkungen auf die Regelungsfunktionen geordnet sind und dass die Fehlerquellen jeder Kategorie unabhängig von den Fehlerquellen der anderen Kategorien den Regelfunktionen derart zugeordnet sind, dass beim Auftreten eines Fehlers nur die Regelungsfunktionen aufrechterhaltbar sind, die in der Rangordnung unterhalb der diesem Fehler zugeordneten Regelungsfunktion oder Sicherheitsniveau liegen.

5. Verbundsystem nach Anspruch 4, **dadurch gekennzeichnet, dass** eine Unterscheidung und Einordnung der Fehlerquellen in die drei Kategorien Sensorik, Elektronik (einschliesslich Elektrik und Kommunikation) und Aktuatorik vorgesehen ist.

## Claims

1. Combined system for controlling the driving behaviour of an automotive vehicle according to different control functions, including arrangements for monitoring the individual control functions and for modifying the control sequence or deactivation of individual functions (partial deactivation) upon the detection of defects or malfunctions,
**characterized in that** the individual control functions are ranked according to safety levels, i.e., according to their necessity and/or their importance for the safety of the vehicle, **in that** the potential sources of error, types of error, malfunctions, etc., are classified according to their possible effects on the control functions and assigned to the control levels, and **in that** upon detection of an error, only those control functions can be maintained which are ranked below the safety level that is assigned to the error that occurred.

2. Combined system as claimed in claim 1,
**characterized in that** the system comprises several of the following control functions:
control of driving stability and steerability (ABS), of the starting performance or the traction (TSC), of driving dynamics (DDC, ASMS, ESP), and/or of brake force distribution (EBD).

3. Combined system as claimed in claim 1 or claim 2,
**characterized in that** in the case of an error, some of the control functions which are ranked below the safety level that is assigned to the error which occurred can be maintained only to a limited extent.

4. Combined system as claimed in any one or more of claims 1 to 3,
**characterized in that** the sources of error, the types of error, or malfunctions are determined according to different categories that are largely independent of each other, and are classified depending on their effects on the control functions, and **in that** the sources of error of each category, irrespective of the sources of error of the other categories, are assigned to the control functions in such a manner that, upon the occurrence of an error, only those control functions can be maintained which are ranked below the control function or the safety level that is assigned to this error.

5. Combined system as claimed in claim 4,
**characterized in that** the sources of error are distinguished and sorted in three categories, i.e., sensor system, electronic system (including the electrical system and communication), and actuator system.

## Revendications

1. Système composé pour le réglage du comportement à la conduite d'un véhicule automobile selon différentes fonctions de réglage, comprenant des appareils pour le contrôle des fonctions de réglage individuelles et pour la modification du déroulement de réglage ou la déconnexion de fonctions individuelles (déconnexion partielle) lors de détection de défauts ou de fonctions défectueuses, **caractérisé en ce qu'**un ordre de classement des fonctions de réglage individuelles est prévu selon des niveaux de sécurité, c'est-à-dire selon leur nécessité et/ou selon leur importance pour la sécurité du véhicule, **en ce que** les sources de défauts potentielles, types de défauts, fonctions défectueuses, etc., sont attribués aux niveaux de sécurité classés selon leurs conséquences possibles sur les fonctions de réglage, et **en ce que**, lors de la détection d'un défaut, seules les fonctions de réglage situés dans le classement au-dessous du niveau de sécurité attribué au défaut apparu sont maintenues.

2. Système composé selon la revendication 1, **caractérisé en ce que** ceci comprend plusieurs des fonctions de réglage suivantes :
réglage de la stabilité de conduite et de la manoeuvrabilité (ABS),
du comportement au démarrage ou de la traction (ASR),
de la dynamique de roulement (FDR, ASMS, ESPS), et/ou
de la répartition de la force de freinage (EBV).

3. Système composé selon la revendication 1 ou 2, **caractérisé en ce que**, en cas de défaut, certaines des fonctions de réglage situées dans le classement au-dessous du niveau de sécurité attribué au défaut apparu ne peuvent être maintenues que de façon limitée.

4. Système composé selon l'une quelconque ou plusieurs des revendications 1 à 3, **caractérisé en ce que** les sources de défauts, les types de défauts ou les fonctions défectueuses sont enregistrés selon différentes catégories largement indépendantes les unes des autres et sont classés respectivement selon leurs conséquences sur les fonctions de réglage et **en ce que** les sources de défauts de chaque catégorie sont attribuées aux fonctions de réglage indépendamment des sources de défauts des autres catégories de telle sorte que, en cas d'apparition d'un défaut, les seules fonctions de réglage qui peuvent être maintenues sont celles qui se situent dans le classement au-dessous de la fonction de réglage ou du niveau de sécurité attribué à ce défaut.

5. Système composé selon la revendication 4, **caractérisé en ce qu'**il est prévu une différenciation et un classement des sources de défauts entre les trois catégories technologie des capteurs, électronique (y compris la partie électrique et la communication) et technologie des actionneurs.
